# DEMANDE DE BREVET EUROPEEN

(11) **EP 1 853 015 A1**
(43) Date de publication de la demande: **07.11.2007**
(21) Numéro de dépôt: 07106116.2
(22) Date de dépôt: 13.04.2007
(51) Int. Cl.: H04L 12/56

(54) **Gestion de la qualité de service d'un réseau de telecommunication**

(30) Priorité: 04.05.2006 FR 0651594
(71) Demandeur: Societé Française du Radiotéléphone, 75008 Paris (FR)
(72) Inventeur: Simoni, Noëmie, 91600, SAVIGNY SUR ORGE (FR); Coude, Philippe, 91360, EPINAY SUR ORGE (FR); Boutignon, Antoine, 75005, PARIS (FR); De Moissac, Arnaud, 75017, PARIS (FR)
(74) Mandataire: Schmit, Christian Norbert Marie

(57) **Abrégé**

De manière à garantir une qualité de service de bout en bout dans un réseau de télécommunication on installe sur chaque noeud/dispositif un processus chargé de gérer la QoS par niveau. Ce processus est apte a effectuer des communications inter niveau et des communications inter dispositif pour un niveau donné. Un configuration globale du réseau peu ainsi être déterminée en prenant en compte toutes les composantes d'un réseau mettant en oeuvre le procédé.

## Description

L'invention a pour objet un procédé d'administration d'un réseau de télécommunication. Le domaine de l'invention est celui des réseaux de télécommunication et plus particulièrement celui de leur administration.

Un but de l'invention est de mettre en oeuvre une qualité de service de type bout en bout. Ici par bout en bout on considère une relation client serveur et/ou paire à paire mettant en oeuvre deux équipements connectés par un réseau de télécommunication. Un réseau de télécommunication est un ensemble d'équipements permettant la connexion d'au moins deux équipements terminaux.

Dans l'état de la technique on considère un réseau, indépendamment des dispositifs qui le constituent physiquement, comme un empilage de niveaux communiquant les uns avec les autres. Ces niveaux sont, dans un exemple classique et en partant du niveau supérieur, le niveau utilisateur, le niveau service, le niveau réseau et le niveau équipement. Cette modélisation se différencie du modèle OSI par la définition de ses niveaux. Le fait que les niveaux communiquent entre eux reste cependant parfaitement présent dans ce modèle. Dans cette modélisation en quatre couches on prend en compte des services applicatifs (niveau service) et des services utilisateurs (niveau utilisateur). Les services applicatifs sont au moins vus comme un ensemble d'interfaces applicatives (aussi connues sous le nom d'APl) que peut invoquer un dispositif pour mettre en oeuvre un service pour l'utilisateur. Un service utilisateur est donc défini en termes de préférences utilisateur et de contexte d'exécution. Un contexte d'exécution est défini par l'ensemble des mesures que le dispositif sollicité pour mettre en oeuvre le service utilisateur est apte à prendre en compte. Cela inclut l'heure, la localisation, la température... On parle aussi d'un contexte spatiotemporel.

Dans l'état de la technique la prise en compte de la QoS (Qualité de Service) se fait le plus souvent au niveau du réseau d'acheminement, c'est-à-dire au niveau réseau qui est la plupart du temps assimilé au réseau d'acheminement. Le niveau service est donc prévu pour s'adapter au réseau, mais pas aux changements qui interviennent sur la plate-forme de services elle-même comme par exemple une saturation d'accès au service qui sera pourtant perçu par un utilisateur final et donc son équipement terminal, comme une dégradation de la QoS.

Dans l'état de la technique, les mécanismes basés sur l'étude du niveau réseau par le niveau service, par exemple, conduisent à une sous-utilisation du réseau et à une pénalisation relativement aux flux TCP. En effet, globalement, ce mode de gestion conduit à une lenteur de réaction de l'architecture car le réseau est en charge de tous les problèmes de QoS de tous les niveaux de l'architecture. Il a donc d'autant moins de temps pour s'occuper correctement des flux, en particulier TCP, qui le traversent. De plus l'observation de la réponse du réseau est lissée par le calcul d'une moyenne sur une fenêtre temporelle glissante afin d'éviter des phénomènes transitoires ou oscillatoires. Cela augmente le temps de réaction de l'architecture globale (l'ensemble des noeuds et des niveaux), car la réaction est proportionnelle à une moyenne de l'activité du niveau réseau et non à la situation réelle de l'architecture globale.

D'autres approches de l'état de la technique considèrent le niveau service comme un niveau totalement décorrélé du niveau réseau. Cependant ces approches, par exemple par réservation de ressources applicatives, entraînent que le niveau service est vu comme un niveau indépendant du niveau réseau et donc que sa QoS n'est considérée influencée que par les éléments de ce niveau, ce qui est faux car cette approche ne s'adapte pas aux différents usages qu'un utilisateur peut faire de son terminal.

Enfin dans l'état de la technique on connaît des tentatives de prise en compte des interactions entre niveaux pour la gestion de la QoS, mais ces tentatives, au final, proposent une organisation statique et figée des architectures globales et se focalisent sur l'adaptation du niveau réseau aux besoins du niveau service. De telles tentatives sont adaptées à un type spécifique de service (voix, vidéo, FTP ou e-mail), ainsi il est très difficile d'introduire un nouveau service dans les architectures proposées. Cela est particulièrement pénalisant à une époque à très forte tendance d'intégration de services sur le réseau Internet.

Dans la pratique, dans l'état de la technique, la règle est de surdimensionner un dispositif lorsque l'on détecte un problème. Il s'agit donc d'une stratégie de gestion de problème sans réelle visibilité. Dans toutes ces approches les problèmes ne sont pas résolus car ils vont inévitablement réapparaître avec l'augmentation du nombre d'utilisateurs de l'architecture.

Dans l'invention on résout ces problèmes en déployant dans l'architecture du réseau des agents. Ces agents sont des programmes installés sur tout ou partie des dispositifs formant le réseau de télécommunication. Ces agents effectuent des mesures de QoS, la transmission de ces mesures et, pour les plus évolués, ils adaptent dynamiquement le réseau de télécommunication aux événements qui s'y produisent.

L'invention a donc pour objet un procédé d'administration d'un réseau de télécommunication comportant plusieurs noeuds, chaque noeud comportant au moins une interface physique dans un réseau de télécommunication, ledit procédé comportant au moins les étapes suivantes:
- détermination d'un itinéraire à travers le réseau de télécommunication, un tel itinéraire passant par une suite ordonnée de noeuds, chaque noeud étant vu comme une superposition de plusieurs niveaux communiquant entre eux, deux noeuds interconnectés communiquant via leur plus bas niveau aussi appelé le niveau équipement, caractérisé en ce que ledit procédé comporte aussi les étapes suivantes:
- évaluation pour chaque noeud d'une qualité de service (QoS),
- émission, par un niveau émetteur d'un noeud terminal de l'itinéraire, d'un message de demande de QoS,
- propagation du message de demande de QoS vers le niveau inférieur du noeud émetteur,
- mise à jour du message de demande de QoS par chaque niveau du noeud traversé,
- renvoi du message de demande de QoS, par le niveau le plus bas du noeud, vers le niveau émetteur, chaque niveau du noeud traversé lors du renvoi mettant en oeuvre les modifications spécifiées par le message de QoS.

Dans une variante l'invention est aussi caractérisée en ce que l'évaluation de la QoS est réalisée pour chaque niveau de chaque noeud.

Dans une variante l'invention est aussi caractérisée en ce que à chaque niveau d'un noeud, les actions de gestion de QoS sont mises en oeuvre par un agent appelé Pilote Organisationnel.

Avantageusement l'invention est aussi caractérisée en ce que chaque pilote organisationnel (PO) peut avoir un des rôles suivants:
- rôle passif, à l'initialisation, le PO intégré a son contrat de QoS, en cours d'exploitation, les valeurs courantes de la QoS atteignable sont mises à jour et des valeurs seuils du contrat sont surveillées, si le PO est sollicité pour communiquer une information, il répond,
- rôle actif, à l'initialisation, le PO peut distribuer des contrats de QoS dans un sous-réseau, formé de noeuds, dont il a la charge ou toutes autres commandes venant d'une entité de gestion, en cours d'exploitation, il notifie à qui de droit des dysfonctionnements constatés, comme dans le rôle passif, il répond aux différentes sollicitations et il met à jour les valeurs courantes de la QoS atteignable,
- rôle interactif, le PO est donc actif, et il a la capacité d'interagir avec ses homologues, à l'initialisation et en cours d'exploitation, il a la capacité de négocier des paramètres de QoS, il joue un rôle d'intermédiaire dans une interconnexion de sous-réseaux ou entre deux niveaux,
- rôle proactif, le PO est interactif et possède des connaissances et des règles lui permettant de prendre des décisions tactiques pour palier un problème qui lui est propre ou qui relève de son domaine réseau de responsabilité.

Dans une variante l'invention est aussi caractérisée en ce que les rôles de PO sont distribués dans le réseau en fonction des emplacements des noeuds hébergeant ces POs.

Dans une variante l'invention est aussi caractérisée en ce que l'on définit des zones/domaines comportant une pluralité de noeuds et pour un niveau donné et pour un domaine donné, un PO centralise des informations de QoS relatives au niveau et au domaine.

Dans une variante l'invention est aussi caractérisée en ce que pour un noeud donné un processus unique réalise les tâches des pilotes organisationnels de tous les niveaux du noeud.

Dans une variante l'invention est aussi caractérisée en ce que la QoS est évaluée selon quatre critères: disponibilité, fiabilité, délai et capacité.

L'invention sera mieux comprise à la lecture de la description qui suit et à l'examen des figures qui l'accompagnent. Celles ci sont présentées à titre indicatif et nullement limitatif de l'invention. Les figures montrent:
- figure 1: une représentation d'un réseau de télécommunication et des niveaux qu'il comporte.
- figure 2: une autre représentation d'un réseau de télécommunication, de noeuds qu'il comporte et des niveaux que comportent ces noeuds.
- figure 3: une illustration d'étape du procédé selon l'invention.
- figure 4: une illustration d'un message de QoS.

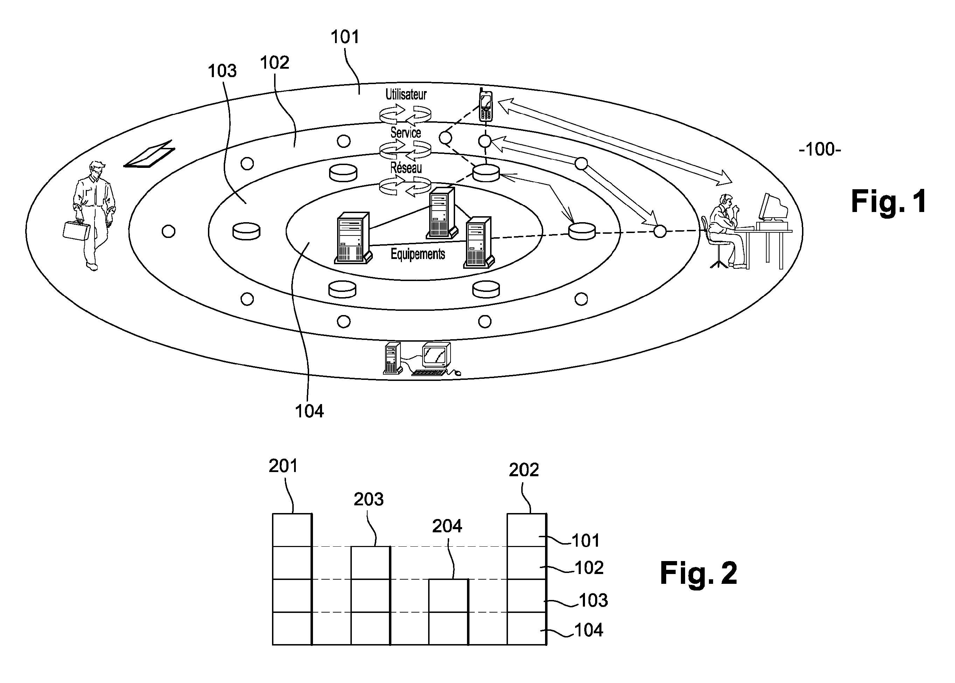

La figure 1 montre un réseau de télécommunication 100 vu comme un empilement de niveaux. Dans la description on considère que ces niveaux sont au nombre de quatre.

Il y a le niveau utilisateur 101 qui correspond aux applications utilisées par l'utilisateur du dispositif. Ce niveau est considéré comme le niveau le plus haut ou le plus éloigné du matériel. Il correspond à la façon dont un utilisateur consommateur perçoit le dispositif.

Il y a le niveau service 102 qui est situé sous le niveau utilisateur qui correspond, entre autres, aux interfaces logicielles utilisées par les applications du niveau utilisateur pour se connecter à différents service de type base de données, serveur de messagerie ou autres.

Il y a le niveau réseau 103 qui est situé sous le niveau service et qui correspond, entre autres, aux protocoles de communications utilisés par les niveaux supérieurs.

Enfin, il y a le niveau équipement 104 qui est situé sous le niveau réseau et qui correspond au matériel proprement dit. Dans le modèle utilisé, le niveau équipement englobe tout l'équipement du dispositif et non pas seulement, comme dans le modèle OSI, les caractéristiques d'une carte réseau et des signaux électriques traités par une telle carte réseau. Le niveau équipement correspond ici aux capacités matérielles de traitement et de restitution d'informations.

Dans la pratique chaque dispositif, ou noeud, formant un réseau et/ou étant connecté à un réseau comporte au moins les deux niveaux inférieurs. Les éléments terminaux serveurs comportent au moins les trois derniers niveaux, et les éléments terminaux utilisateurs comportent les quatre niveaux.

La figure 2 illustre une communication bout en bout entre deux dispositifs 201 et 202 par l'intermédiaire de dispositifs 203 et 204. La figure 2 illustre le fait que chacun de dispositifs 201 à 204 comporte au moins les deux niveaux inférieurs.

Le dispositif 201 est, par exemple, un assistant personnel communicant, un ordinateur personnel, un téléphone mobile ou tout autre dispositif communicant. Le dispositif 202 est, par exemple, un serveur de fichiers, de messagerie, ou autre. Le fait que le serveur 202 comporte une couche 101 utilisateur s'explique, par exemple, par le fait que le serveur 202 comporte une interface graphique de gestion ou est également utilisé comme un poste client. Les dispositifs 203 et 204 sont, par exemple, des routeurs, des répéteurs ou autre dispositif d'acheminement / traitement d'information dans le réseau de télécommunication 100.

Dans la pratique les dispositifs 201 et 202 échangent des données en utilisant des protocoles de communication qui standardisent des formats de trames. Ces trames sont des paquets de données qui circulent dans le réseau. On dit aussi que ces paquets traversent ces dispositifs. Ces paquets de données sont non seulement acheminés mais aussi traités par les différents dispositifs du réseau.

D'autre part, pour chaque dispositif traversé, les paquets traversent au moins deux niveaux de ce dispositif. A chaque niveau traversé le dispositif effectue une ou plusieurs actions liée(s) au niveau et à la nature du paquet.

On voit donc que la QoS perçue par un utilisateur du dispositif dépend de chaque niveau de chaque dispositif traversé par les paquets de données d'une extrémité à l'autre de la liaison entre les couches supérieures des dispositifs terminaux de la communication bout en bout considérée.

Dans la pratique une QoS est négociée soit à l'abonnement à un service soit à la connexion au réseau ou à un serveur. Cette QoS est ensuite garantie statiquement à chaque niveau. C'est-à-dire que chaque niveau se considère comme entièrement responsable de la QoS de la communication. Cette approche conduit à surdimensionner les moyens mis en oeuvre à chaque niveau pour chaque dispositif.

Dans l'invention, au contraire on considère chaque niveau comme un élément communicant de la chaîne de niveaux correspondant à la communication de bout en bout. A des fins d'explication on considère donc chaque niveau comme un dispositif doté de moyens de traitement et de communication. Chaque niveau peut alors participer à l'élaboration d'une QoS de bout en bout.

Ainsi dans l'invention on répartit dans tout ou partie des niveaux des dispositifs formant le réseau de télécommunication des processus chargés de veiller au maintien d'une QoS. Ces processus dialoguent de manière horizontale et verticale. Dans l'invention on appel ces processus des pilotes organisationnels ou PO.

Chaque pilote organisationnel (PO) peut avoir un des rôles suivants:
- rôle passif, à l'initialisation, le PO intègre son contrat de QoS, en cours d'exploitation, les valeurs courantes de la QoS atteignable sont mises à jour et des valeurs seuils du contrat sont surveillées, si le PO est sollicité pour communiquer une information, il répond,
- rôle actif, à l'initialisation, le PO peut distribuer des contrats de QoS dans un sous réseau, formé de noeuds, dont il a la charge ou toutes autres commande venant d'une entité de gestion, en cours d'exploitation, il notifie à qui de droit des dysfonctionnements constatés, comme dans le rôle passif, il répond aux différentes sollicitations et il met à jour les valeurs courantes de la QoS atteignable.
- rôle interactif, le PO est donc actif, et il a la capacité d'interagir avec ses homologues, à l'initialisation et en cours d'exploitation, il a la capacité de négocier des paramètres de QoS, il joue un rôle d'intermédiaire dans une interconnexion de sous réseaux ou entre deux niveaux ,
- rôle proactif, le PO est interactif et possède des connaissances et des règles lui permettant de prendre des décisions tactiques pour palier un problème qui lui est propre ou qui relève de son domaine réseau de responsabilité.

Dans la pratique un PO peut avoir la responsabilité d'un domaine du réseau, c'est-à-dire être chargé de la gestion d'un certain nombre de dispositifs du réseau. La QoS de ce domaine est alors décrite et gérée à travers ce PO. Cela permet de simplifier une modélisation du réseau et de limiter des flux d'informations échangés entre les différents PO. Dans ce cas ce domaine peut être réduit, du point de vue de la modélisation de la QoS de bout en bout, à ses dispositifs frontières.

Dans une mise en oeuvre pratique un dispositif peut ne mettre en oeuvre qu'un seul processus de type PO qui est alors apte à gérer tous les niveaux. Il est alors évident qu'un tel PO est apte à prendre en compte tous les éléments correspondant à tous les niveaux. Si il s'agit de plusieurs processus, alors ils utilisent pour communiquer les modes de communication standard des processus sur une machine comme les fichiers d'échanges ou la boucle locale réseau.

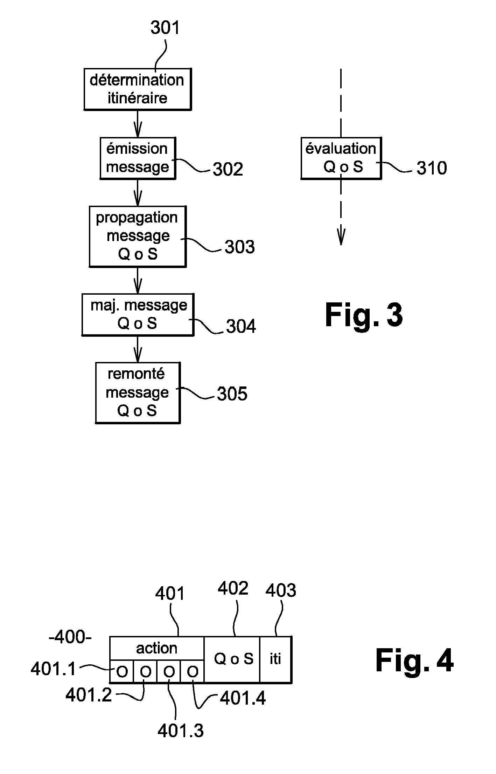

La figure 3 montre une étape préliminaire 301 de détermination d'un itinéraire. Cette étape correspond, par exemple, à une tentative d'établissement d'une communication entre le dispositif 201 et le dispositif 202. Cet itinéraire est donc déterminé de façon classique en ayant recours, par exemple, à un système de type DNS. Pour l'invention on considère qu'un itinéraire est matérialisé par deux extrémités, une extrémité possible étant n'importe quel niveau de n'importe quel noeud du réseau.

L'utilisateur qui a initié la détermination de cet itinéraire en cherchant à se connecter à un serveur a, dans l'invention, souscrit un contrat de QoS lui garantissant une QoS pour ses communications sur le réseau de télécommunication.

Il existe de nombreuse façon de décrire une QoS. Pour la description de l'invention on utilise une définition de la QoS selon 4 critères qui sont :
- disponibilité,
- fiabilité,
- délai, et
- capacité.

Ces critères s'appliquent, avec plus ou moins d'importance, à chaque niveau de chaque dispositif du réseau de télécommunication. On note ici que le type de modélisation de la QoS n'influe pas sur le principe de l'invention.

De l'étape 301 on passe donc à une étape 302 d'élaboration et d'émission d'un message de QoS. La figure 4 illustre un tel message de QoS selon l'invention.

La figure 4 montre qu'un message 400 de QoS comporte au moins un champ 401 action et un champ 402 de contrat de QoS. Dans une variante le message 400 comporte aussi un champ 403 de destination.

Le champ 401 comporte lui même quatre champs 401.1 à 401.4. Dans une mise en oeuvre de l'invention ces champs 401.1 à 401.4 sont des drapeaux ayant donc uniquement deux valeurs possibles 0 ou 1 par exemple. Dans l'invention le champ 401 comporte autant de champ drapeau qu'un dispositif du réseau de télécommunication peut comporter de niveau. Dans la modélisation du réseau choisie le champ 401 comporte donc quatre champs drapeaux. Ces champs drapeau sont mis à jour au cours du traitement du message de QoS. Une valeur de 0 dans ce champ signifie que le niveau correspondant au champ drapeau n'est pas concerné, ou n'a pas à être actif, pour la réalisation du contrat de QoS décrit par le champ 402. Une valeur de 1 dans ce champ signifie le contraire. Ici par être actif cela signifie modifier la configuration du niveau.

Le champ 403 comporte, par exemple, une adresse de type adresse IP ou une adresse universelle de type URL. L'avantage de l'adresse de type URL est qu'elle permet d'identifier complètement une ressource et donc de remonter jusqu'au niveau service sur le dispositif 202.

Le champ 402 comporte, par exemple, un niveau numérique à atteindre pour chacun des critères décrivant une QoS. Il s'agit donc en fait d'une note à atteindre pour respecter contrat de QoS. Dans notre cas le champ 402 comporte quatre notes, une pour chaque critère de QoS.

Une fois le message 400 produit, il est émis dans le réseau de télécommunication pour y être traité. Dans l'invention l'émission peut se limiter au dispositif ayant produit le message. En effet on rappel qu'un dispositif/noeud comporte plusieurs niveau communiquant les uns avec les autres, ces niveau formant alors un réseau.

Dans l'invention le message 400 parcourt le réseau par niveau, c'est-à-dire qu'il est émis par un niveau supérieur du dispositif l'ayant produit jusqu'au niveau inférieur du dispositif. Dans la pratique le message 400 de QoS peut donc très bien ne pas quitter le dispositif producteur si les PO de celui-ci comporte toutes les informations pour le traitement du message de QoS. Il se peut aussi que le message 400 soit traité par plusieurs dispositif dans le réseau de télécommunication.

De l'étape 302 on passe alors à une étape 303 de propagation du message 400 de QoS. Cette propagation consiste donc en un parcours descendant des niveaux du réseau.

A chaque niveau, le PO correspondant lit le contrat de QoS, c'est-à-dire le contenu du champ 402 et le compare à la QoS que peut atteindre son niveau avec sa configuration actuelle. Cette QoS qui peut être atteinte est mise à jour en permanence via une étape 310 d'évaluation de la QoS.

Si pour ce niveau la QoS peut être atteinte, c'est-à-dire si les notes du contrat sont inférieures aux notes du niveau alors le message de QoS est simplement passé au niveau inférieur et le champ drapeau correspondant au niveau est positionné à 0.

Si pour ce niveau la QoS du contrat ne peut être atteinte alors une solution pour atteindre le contrat est recherchée par le PO. Une telle solution consiste en une modification des paramètres de configuration du niveau. Ces paramètres de configuration correspondent aux critères de description de la QoS. Dans la pratique la recherche de solution dépend de la nature du PO. Si le message de QoS est traité par un dispositif/niveau dont le PO est passif alors ce PO va, en guise de traitement, transmettre le message de QoS à un PO de même niveau ayant plus de pouvoir que lui. On remarque ici que le message de QoS est transmis à un autre dispositif mais est traité au même niveau. Les PO de faible pouvoir comportent donc, par configuration, au moins une adresse d'un PO de pouvoir supérieur vers lequel ils transmettent les messages de QoS qu'ils ne parviennent pas à traiter. Dans ce cas le champ 402 du message de QoS est modifié pour prendre en compte les modifications de configuration apportées au niveau. Cette modification du champ 402 permet à un niveau inférieur de prendre en compte la configuration des niveaux supérieurs. En règle générale cette modification est un abaissement du contrat si le niveau prend en charge une partie de la QoS, ou un relèvement du contrat si le niveau décide que la QoS sera plus prise en charge par les niveaux inférieurs.

Un autre cas de transmission horizontale de message de QoS est lorsque le champ 403 existe et que le PO courant n'a pas la connaissance de toute l'information utile pour le traitement du message. Un tel cas se produit lorsque l'utilisateur du dispositif 201 cherche à atteindre un service situé à plusieurs dispositifs de distance du dispositif 201. Il se peut alors que le PO n'ait pas la connaissance des QoS que peuvent atteindre les dispositifs intermédiaires. Il faut donc obtenir cette information, par exemple, en transmettant le message 400 de QoS au niveau concerné du dispositif concerné.

On remarque ici que le contenu du champ 403 peut simplement identifier un service. La connaissance de ce service et la connaissance du contrat de QoS suffisent alors aux PO du réseau pour connecter le dispositif 201 à un dispositif 202 rendant le service identifié par le champ 403 et en respectant la QoS spécifiée par le champ 402.

Dans la recherche d'une solution un PO de niveau N dialogue, si cela est requis avec un PO de niveau N+1. Grâce au contenu du champ 401 un PO de niveau N sait si un PO de niveau N a décidé d'entreprendre des actions ou non pour la réalisation du contrat de QoS. Le PO de niveau N peut alors demander au PO de niveau N+1 d'adapter sa QoS si le PO de niveau N ne parvenait pas à atteindre la QoS requise par le contrat transmis via le champ 402.

L'étape 303 est terminée lorsque le message de QoS a atteint et a été traité par le niveau le plus bas du réseau de télécommunication. A ce stade le champ 401 a été mis à jour par l'ensemble des niveaux du réseau de télécommunication via l'étape 304 qui est en fait une sous étape de l'étape 303. On passe alors à une étape 305 de remontée du message de QoS mis à jour.

Dans l'étape 305 le message de QoS est émis depuis le niveau le plus bas du réseau vers le niveau le plus haut du réseau. A chaque passage de niveau le PO concerné vérifie le contenu du champ drapeau correspondant à son niveau et, si le champ drapeau vaut 1, met à jour la configuration de son niveau.

L'étape 305 prend fin lorsque le message de QoS est revenu et a été traité au niveau l'ayant produit.

La figure 3 montre aussi une étape 310 d'évaluation de la QoS. Cette étape est mise en oeuvre en permanence par l'ensemble des PO du réseau de télécommunication. Les actions mises en oeuvre dans cette étape varient d'un PO à l'autre en fonction du rôle du PO. Ces actions ont été décrites lors de l'exposé des rôles des PO.

Le fait que cette tâche soit permanente permet d'adapter de manière continue la configuration du réseau. En effet lorsqu'un PO détecte, pour uen raison quelconque, qu'il n'est plus capable de remplir son contrat de QoS alors le dispositif correspondant produit un message de QoS et lance la procédure telle que décrite aux étapes 301 à 305.

## Revendications

1. - Procédé d'administration d'un réseau de télécommunication comportant plusieurs noeuds, chaque noeud comportant au moins une interface physique dans un réseau de télécommunication, ledit procédé comportant au moins les étapes suivantes:
- détermination d'un itinéraire à travers le réseau de télécommunication, un tel itinéraire passant par suite ordonnée de noeuds, chaque noeud étant vu comme une superposition de plusieurs niveaux communiquant entre eux, deux noeuds interconnectés communiquant via leurs plus bas niveau aussi appelé le niveau équipement,
**caractérisé en ce que** ledit procédé comporte aussi les étapes suivantes:
- évaluation pour chaque noeud d'une qualité de service (QoS),
- émission, par un niveau émetteur d'un noeud terminal de l'itinéraire, d'un message de demande de QoS,
- propagation du message de demande de QoS vers le niveau inférieur du noeud émetteur,
- mise à jour du message de demande de QoS par chaque niveau du noeud traversé,
- renvoi du message de demande de QoS, par le niveau le plus bas du noeud, vers le niveau émetteur, chaque niveau du noeud traversé lors du renvoi mettant en oeuvre les modifications spécifiées par le message de QoS.

2. - Procédé selon la revendication 1, **caractérisé en ce que** l'évaluation de la QoS est réalisée pour chaque niveau de chaque noeud.

3. - Procédé selon l'une des revendications 1 ou 2 **caractérisé en ce que** à chaque niveau d'un noeud, les actions de gestion de QoS sont mises en oeuvre par un agent appelé Pilote Organisationnel.

4. - Procédé selon la revendication 3 **caractérisé en ce que** chaque pilote organisationnel (PO) peut avoir un des rôles suivants:
- rôle passif, à l'initialisation, le PO intégré a son contrat de QoS, en cours d'exploitation, les valeurs courantes de la QoS atteignable sont mises à jour et des valeurs seuils du contrat sont surveillées, si le PO est sollicité pour communiquer une information, il répond,
- rôle actif, à l'initialisation, le PO peut distribuer des contrats de QoS dans un sous réseau, formé de noeuds, dont il a la charge ou toutes autres commande venant d'une entité de gestion, en cours d'exploitation, il notifie à qui de droit des dysfonctionnements constatés, comme dans le rôle passif, il répond aux différentes sollicitations et il met à jour les valeurs courantes de la QoS atteignable,
- rôle interactif, le PO est donc actif, et il a la capacité d'interagir avec ses homologues, à l'initialisation et en cours d'exploitation, il a la capacité de négocier des paramètres de QoS, il joue un rôle d'intermédiaire dans une interconnexion de sous réseaux ou entre deux niveaux ,
- rôle proactif, le PO est interactif et possède des connaissances et des règles lui permettant de prendre des décisions tactiques pour palier un problème qui lui est propre ou qui relève de son domaine réseau de responsabilité.

5. - Procédé selon la revendication 4 **caractérisé en ce que** les rôles de PO sont distribués dans le réseau en fonction des emplacements des noeuds hébergeant ces POs.

6. - Procédé selon l'une des revendications 2 à 5, **caractérisé en ce que** l'on définit des zones/domaines comportant une pluralité de noeuds, et pour un niveau donné et pour un domaine donné, un PO centralise des informations de QoS relatives au niveau et au domaine.

7. - Procédé selon l'une des revendications 2 à 6, **caractérisé en ce que** pour un noeud donné un processus unique réalise les tâches des pilotes organisationnels de tous les niveaux du noeud.

8. - Procédé selon l'une des revendications 1 à 7, **caractérisé en ce que** la QoS est évaluée selon quatre critères: disponibilité, fiabilité, délai et capacité.
